## Europäisches Patentamt

## European Patent Office

## Office européen des brevets

(19)

(11) Veröffentlichungsnummer: **0 211 442 B1**

(12)

# EUROPÄISCHE PATENTSCHRIFT

(45) Veröffentlichungstag der Patentschrift:
**17.05.89**

(51) Int. Cl.⁴: **F16F 9/46**

(21) Anmeldenummer: **86110840.5**

(22) Anmeldetag: **05.08.86**

(54) **Regelbares Ventil für einen Schwingungsdämpfer.**

(30) Priorität: **07.08.85 DE 3528341**

(43) Veröffentlichungstag der Anmeldung:
**25.02.87 Patentblatt 87/9**

(45) Bekanntmachung des Hinweises auf die Patenterteilung:
**17.05.89 Patentblatt 89/20**

(84) Benannte Vertragsstaaten:
**AT BE CH DE FR GB IT LI LU NL SE**

(56) Entgegenhaltungen:
**EP-A- 0 122 575**
**DE-A- 3 312 881**

(73) Patentinhaber: **F & O Electronic Systems GmbH & Co.,
Kirchenstrasse 38, D-6901 Neckarsteinach(DE)**

(72) Erfinder: **Obstfelder, Günther, Panoramastrasse 28,
D-6840 Weinheim-Lützelsachsen(DE)**
Erfinder: **Kreutze, Gerhard, Kirchenstrasse 38,
D-6901 Neckarsteinach(DE)**
Erfinder: **Lüttig, Winfried, Lange Acker 16,
D-6901 Heiligkreuzsteinach(DE)**

(74) Vertreter: **Mierswa, Klaus, Dipl.-Ing., Tullastrasse 19,
D-6800 Mannheim 1(DE)**

## Beschreibung

Die Erfindung geht aus von einem regelbaren Ventil für die Kolbenstange eines Schwingungsdämpfers nach dem Oberbegriff des Anspruchs 1.

Durch die DE-C 3 346 352 ist ein regelbares Ventil für die Kolbenstange eines Schwingungsdämpfers nach dem Oberbegriff des Anspruchs 1 bekanntgeworden, bei dem der Steuerschieber als Hubschieber ausgebildet ist. Dieser ist als hohlzylindrische Hülse gestaltet, die die Kolbenstange umschließt und auf dieser im Bereich der Radialkanäle über deren Öffnungen hinweg auf und ab beweglich angeordnet ist, wobei die Hülse an der Mantelwandung in Querschnittsebenen liegende, übereinander angeordnete Ringe aus ferromagnetischem Werkstoff aufweist, die untereinander magnetisch in Verbindung stehen. Der Elektromagnet innerhalb des Zylinders besteht aus einer Mehrzahl von selektiv ansteuerbaren Erregerspulen mit Schalenkernen, die in Längsrichtung der Kolbenstange übereinander angeordnet und zu dieser ortsfest sind und die Hülse torusförmig umgeben. Die Erregerspulen mit Schalenkernen bilden dabei den Stator, die Hülse den beweglichen Teil eines Linearmotors. Die Größe bzw. der Hub des einzelnen Schrittes des Steuerschiebers hängt von der Anzahl der Ringe desselben, der Anzahl der Polschuhe der Schalenkerne bzw. der Anzahl der Erregerspulen und dem Abstand der Polschuhe voneinander ab. Bei fortlaufend nacheinander erfolgender Ansteuerung der Erregerspulen durch einen elektronischen Regel- bzw. Steuerschaltkreis geraten wechselseitig bestimmte Ringe der Hülse den Polschuhen benachbart gegenüber, so daß der Steuerschieber schrittweise mit dem wandernden Magnetfeld innerhalb der Erregerspulen auf der Kolbenstange fortbewegt wird.

Durch die DE-A 3 312 899 ist ein ähnliches regelbares Ventil als Schrittschaltmotor für die Kolbenstange eines Schwingungsdämpfers bekanntgeworden, bei hohlzylindrische Hülse gestaltet, die die Kolbenstange im Bereich der Radialkanäle umschließt und die in ihrer Wandung entsprechend der Anzahl der Radialkanäle Öffnungen in radialer Richtung besitzt, die bei Drehung der Hülse in einer Querschnittsebene relativ zur Kolbenstange die Radialkanäle und somit die Passage mehr oder weniger freigeben, wobei die Elektromagnete innerhalb des Zylinders an der Kolbenstange ortsfest befestigt und koaxial in Abständen voneinander um dieselbe und den Steuerschieber herum angeordnet sind. Wandert das Magnetfeld von einem Elektromagnet zum anderen um die Kolbenstange um, so wird der Drehschieber entsprechend mitgenommen und gedreht.

In einer Reihe von Anwendungsfällen ist es wünschenswert, daß der Regel- bzw. Steuerschaltkreis die augenblickliche Verschließstellung des Steuerschiebers bezüglich der Passage für das Dämpfungsmedium kennt, um die optimale Dämpfungsstellung des Steuerschiebers zum schnellen Reagieren auf die Schwingungsänderungen der bewegten Massen zu errechnen. Die Rückmeldung der augenblicklichen Verschließstellung des Steuerschiebers ist auch deshalb wünschenswert, um die Funktionssicherheit des Systems überprüfen zu können und um einen Ausfall des elektrischen Systems sofort zu erkennen.

Durch die DE-A 3 304 815 ist dafür ein Stoßdämpfer mit einstellbarer Dämpfungswirkung bekanntgeworden, bei dem durch das Anwählen von einer aus zwei Düsenreihen mittels eines Düsenstellgliedes entsprechend der Einschätzung des Fahrers die Dämpfungswirkung eingestellt werden kann. Ebenso kann eine selbsttätige Erhöhung während des Ausfahrens zur Verbesserung der Straßenhaftung und eine Erniedrigung während des Einfahrens zur Verbesserung des Fahrkomforts eingestellt werden. Dazu ist ein mit einer Düse versehenes Ringteil und ein auf dessen Oberseite angeordnetes federbelastetes Scheibenventil vorhanden. Beim Ausfahren ist das Scheibenventil geschlossen, so daß ein Bypaßweg nur durch die Düse des Ringteils und eine Düse erfolgt, während beim Einfahren das Scheibenventil geöffnet wird und ein zweiter Bypaßweg über die zweite Düse hinzukommt. Die Verschließstellung des Düsenstellgliedes bezüglich seines Drehwinkels ist nun mittels einer elektrischen Steuereinheit, die eine Rückmeldeeinheit aufweist, an eine Motor-Ansteuerschaltung für den Stellmotor des Düsenstellgliedes rückmeldbar.

Bei dieser Rückmeldung ist ein Stellungssensor als Potentiometer vorhanden, welches als Gleitkontakt oder als Bürste ausgebildet ist, die über ein kreisförmiges Leitungsmuster schleift. Die Bürste ist an der Abtriebswelle eines Untersetzungsgetriebes befestigt und wird durch den Stellungsmotor zusammen mit dem Düsenstellglied gedreht. Das kreisförmige Leitungsmuster aus einem Widerstandsmaterial steht fest und beide Enden liegen an einer Versorgungsspannung. Wenn nun die Abtriebswelle des Untersetzungsgetriebes durch den Motor zusammen mit dem Düsenstellglied gedreht wird, gleitet die Bürste an dem Leitungsmuster und es entsteht eine Spannung proportional zur Winkelstellung des Berührungspunktes zwischen der Bürste und dem Leitungsmuster, d.h. somit zur Winkelstellung des Düsenstellgliedes. Diese Spannungssignale werden einer Rückmeldeeinheit zugeführt, die ihrerseits Ausgangssignale an einen Komparator abgibt, dem gleichzeitig über einen Signalgenerator ein Referenzsignal zugeführt wird. Das Ausgangssignal des Komparators wird auf die Motor-Ansteuerschaltung gegeben, die ihrerseits den Stellmotor ansteuert. Entspricht das Signal der Rückmeldeeinheit nicht dem Signal aus dem Signalgenerator, so gibt der Komparator ein entsprechendes Steuersignal an die Motor-Ansteuerschaltung und somit an den Stellmotor ab. Bei der Drehung des Motors nimmt dieser die Bürste mit, bis diese eine Stellung erreicht hat, in der das Signal aus der Rückmeldeeinheit und das Referenzsignal aus dem Signalgenerator gleich sind, so daß der Komparator kein Ausgangssignal mehr abgibt.

Diese Rückmeldung arbeitet somit nur indirekt, d.h. die tatsächliche Stellung des Drehwinkels wird über eine abgeleitete elektrische Größe gemessen. Dadurch ist der Nachteil gegeben, daß bei Störungen innerhalb der elektrischen Steuereinheit oder der antreibenden Mechanik des Düsenstelltriebes eine Rückmeldung falsch oder nicht mehr erfolgt.

Der Erfindung liegt deshalb die Aufgabe zugrunde, ein regelbares Ventil für die Kolbenstange eines Schwingungsdämpfers gemäß der genannten Gattung derart weiter zu entwickeln, daß dieses bei einfachem Aufbau die augenblickliche Verschließstellung des Steuerschiebers bezüglich der Passage an den Regel- bzw. Steuerschaltkreis praktisch störungsfrei rückzumelden imstande ist, um dieses Stellungssignal zur Überwachungs- und Funktionsanalyse auszuwerten.

Die Lösung dieser Aufgabe besteht erfindungsgemäß in den Merkmalen des Anspruchs 1. Weitere Ausgestaltungen der Erfindung sind in den Unteransprüchen gekennzeichnet.

Das erfindungsgemäße Ventil besitzt den Vorteil, daß aufgrund des Stellungs- Meßgebers die augenblickliche Verschließstellung des Steuerschiebers bezüglich der Passage für das Dämpfungsmedium an den Regel- oder Steuerschaltkreis mittels eines synchronen Stellungssignals rückgemeldet wird, so daß diese Verschließstellung in den Rechenvorgang des nächsten Verstellschrittes einbezogen werden kann. Des weiteren wird durch dieses synchrone Stellungssignal eine momentane Überprüfung der Funktionssicherheit der erfindungsgemäßen Ventils erreicht, weil dieses synchrone Stellungssignal als Freigabesignal für die anstehenden Regel oder Steuersignale innerhalb der Regel- oder Steuerschaltung für den nächsten Schritt des Hubschiebers dient. Somit findet in vorteilhafter Weise eine permanente Überwachung der Funktionstüchtigkeit des Ventils statt. Dadurch wird die Fahrsicherheit eines mit derartigen Schwingungsdämpfern, die Einrohr- oder Zweirohrschwingungsdämpfer sein können, ausgerüsteten Fahrzeuges entscheidend erhöht. Die Rückmeldung geschieht praktisch störungsfrei, weil in vorteilhafter Weise der Hubschieber gleichzeitig ein Teil des Sensors zusammen mit der Spule ist. In vorteilhafter Weise bleibt bei einem Ausfall der Spule die Funktion des Hubschiebers voll erhalten, ebenso kann bei einem Wegfall der Rückmeldung weiterhin der Hubschieber geregelt bzw. gesteuert werden. Des weiteren besitzt das erfindungsgemäße Ventil einen einfacheren Aufbau und eine konstruktiv einfachere Gestaltung, als das bekannte Ventil des Standes der Technik, deshalb auch von hierher das erfindungsgemäße Ventil eine größere Funktionssicherheit besitzt.

Gegenüber dem bekannten Ventil mit Stellmotor und Getriebe und Motorwelle besitzt das erfindungsgemäße Ventil in vorteilhafter Weise grundsätzlich den einfacheren Aufbau eines Linearmotors.

In vorteilhafter Weise kann mittels des erfindungsgemäßen Ventils ein absolutes Stellungssignal des Stellungsmeßgebers gewonnen werden, welches neben der Verschließstellung des Hubschiebers auch die momentane Bewegungsrichtung desselben angibt. Das wird am einfachsten durch die transformatorische Ausgestaltung als Stelltransformator erreicht, indem das ferromagnetische Endteil des Hubschiebers durch veränderliche Abdeckung der Spulen den für die magnetischen Feldlinien wirksamen Luftspalt verändert und so die Gegeninduktivität der Sekundärspule und dadurch die induzierte Spannung verändert wird. Dadurch ist eine hohe Änderung des Stellungssignals bei Änderung der Verschließstellung des Hubschiebers um jeweils einen Schritt gegeben.

Wenn die Bewegungsrichtung des Hubschiebers nicht diskriminiert zu werden braucht, kann in vorteilhafter Weise zur Gewinnung des Stellsignals auch nur eine Spule verwendet und deren Induktivität durch die Veränderung des Luftspaltes mittels des Endteils des Hubschiebers beeinflußt werden.

Daneben kann vorteilhafterweise das Stellungssignal linearisiert sein, indem die Spule oder die Spulen mit nichtkonstanter Wicklungsdichte gewickelt sind.

Drei Beispiele der Erfindung sind in der Zeichnung dargestellt und anschließend beschrieben. Dabei zeigen:

Figur 1 einen Längsschnitt durch einen Schwingungsdämpfer mit Bypaß und diesen verschließenden Hubschieber, wobei die Figur um die Längsachse 3 zu spiegeln ist

Figur 2 eine vergrößerte Darstellung der beiden als Stelltransformator wirkenden Spulen in Zusammenhang mit dem Endteil des Hubschiebers, wobei hier die Spulen übereinandergewickelt innerhalb eines gemeinsamen Schalenkernes angeordnet sind

Figur 3 eine weitere Ausgestaltung der beiden Spulen als Stelltransformator, wobei die Spulen getrennt in verschiedenen Schalenkernen angeordnet sind und das Endteil des Hubschiebers zwischen beiden Spulen einfährt Figur 4 eine Ausführung mit nur einer Spule im Zusammenwirken mit dem Endteil des Hubschiebers.

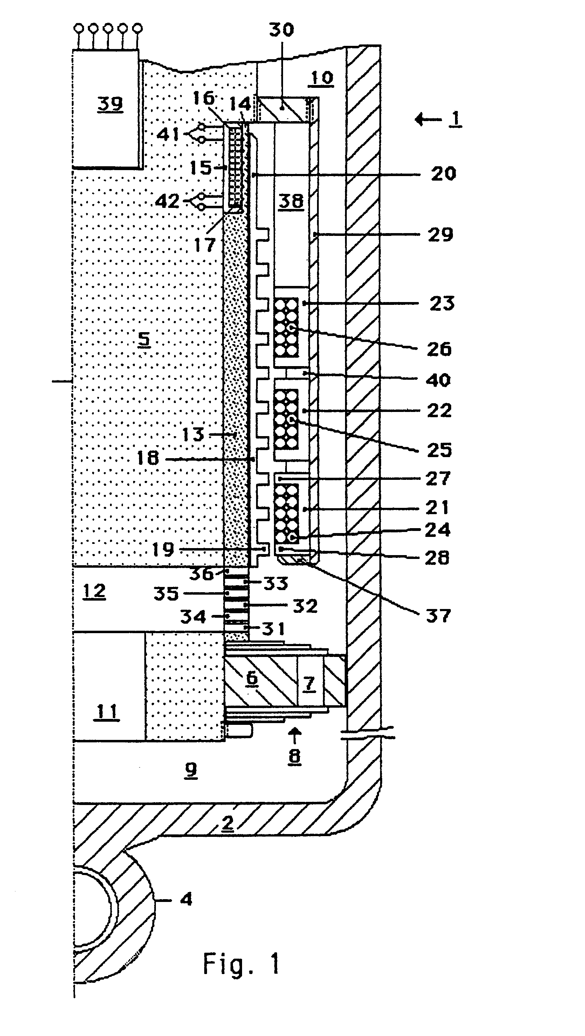

Gemäß der Figur 1 besteht der Schwingungsdämpfer 1 aus einem Zylinder 2, der beidendig geschlossen und mit mindestens einem Dämpfungsmedium gefüllt ist und in den von oben eine Kolbenstange 5 mit Kolben 6 hineinragt. Am oberen, nicht gezeigten Ende der Kolbenstange und am unteren Ende des Zylinders sind jeweils eine Halterung 4 zur Befestigung des Schwingungsdämpfers 1 einerseits an der Karrosserie und andererseits am Rad oder an der Achse des Fahrzeugs angeordnet. Der Kolben 6, der in bekannter Weise scheibenförmig ausgebildet und gehaltert ist, kann ein gewöhnlicher Kolben sein, wie er im Schwingungsdämpferbau bekannt ist, weshalb der Kolben 6 Durchgangsbohrungen 7 für das Dämpfungsmedium aufweisen kann, die mittels Federpakete 8 abgedeckt sind. Die Federn können unterschiedliche Federnkonstante aufweisen, wodurch der Kolben 6 beispielsweise mit Zug- und Druckventil ausgeführt sein kann. Der Kolben 6 teilt das Volumen des Zylinders in eine untere Kammer 9 und eine obere Kammer 10, die somit über die Ventilbohrungen 7 miteinander in Verbindung stehen.

Des weiteren weist die Kolbenstange 5 an ihrem unteren Ende, ausgehend von der Stirnfläche der Kolbenstange, eine Längsbohrung 11 auf, die zentrisch zur Längsachse 3 der Kolbenstange 5 verläuft und sich bis über den Kolben 6 erstreckt. Quer zu dieser Längsbohrung 11 sind oberhalb des Kolbens 6 Querdurchbrüche, z.B. in Form von mindestens zwei Radialkanälen 12, angeordnet, die radial in die Längsbohrung 11 münden und symmetrisch innerhalb des Kolbens 5 angeordnet sind. Die Anzahl der Radialkanäle kann beliebig sein. Auf das untere Ende der Kolbenstange 5 ist eine Hülse 13, vorzugsweise aus dia- oder paramagnetischem Material, z.B. Messing, aufgezogen, die im Bereich der Radialkanäle 12 in Reihen übereinanderliegende Durchgangsbohrungen 31, 32, 33, 34, 35, 36 aufweist, wobei jede Reihe von Durchgangsbohrungen in einer Querschnittsebene der Kolbenstange 5 liegt.

Auf dieser Hülse 13, die fest auf der Kolbenstange 5 aufsitzt, ist ein hülsenförmiger Hubschieber 18 frei nach oben und unten verschieblich aus ferromagnetischem Material, vorzugsweise aus weichem magnetischem Material, wie Weicheisen, angeordnet. Der Hubschieber 18 deckt bei Bewegung jeweils eine Reihe der Durchgangsbohrungen ab und verändert dadurch den Querschnitt des Bypasses.

Der Hubschieber 18 besitzt eine Mehrzahl von hervorstehenden Erhebungen oder Ringen 19, die in Querschnittsebenen des Hubschiebers 18 bzw. der Kolbenstange 5 in äquidistanten Abständen angeordnet und miteinander magnetisch verbunden sind. Auf der Kolbenstange 5 oberhalb des Bewegungsraumes des Hubschiebers 18 ist eine Scheibe 30 aufgesetzt, auf deren peripheren Rand ein rohrförmiges Gehäuse 29 befestigt ist, das beispielsweise aufgeschraubt sein kann und das sich nach unten bis unmittelbar oberhalb der Radialkanäle erstreckt. Innerhalb des Gehäuses 29 sind mehrere torusförmige Schalenkerne 21, 22, 23 übereinander angeordnet, die den Hubschieber umgeben und die je zwei ringförmige Polschuhe 27, 28 besitzen, zwischen denen je eine Erregerspule 24, 25, 26 angeordnet ist. Die Schalenkerne 21, 22, 23 die durch nichtmagnetische Distanzringe 40 voneinander getrennt sind, bestehen vorzugsweise aus magnetisch weichem Material und sind dergestalt angeordnet, daß deren Polschuhe 27, 28 ringförmig den Ringen 19 des Hubschiebers 18 unter Belassung eines geringen Luftspaltes gegenüberstehen. Die Erregerspulen 24, 25, 26 sind einzeln ansteuerbar und über Leitungen mit einem Regel- bzw. Steuerschaltkreis 65 verbunden, der innerhalb einer Bohrung in der Kolbenstange 5 angeordnet sein kann. In das untere Ende des Gehäuses 29 ist zum Verschließen desselben ein Gewindering 37 eingeschraubt; oberhalb der Schalenkerne 21, 22, 23 ist das Gehäuse 29 mittels eines Füllringes 38 ausgefüllt.

Der Aufbau der Schalenkerne 21, 22, 23 mitsamt den Erregerspulen 24, 25, 26 zusammen mit dem Hubschieber 18 und dessen Ringen 19 ist dergestalt, daß diese Teile einen Schrittmotor, und zwar einen Linearmotor bilden, wobei die Größe des einzelnen Schrittes von der Anzahl der Ringe des Hubschiebers und deren Abstände, der Anzahl der Polschuhe und dem Abstand der Polschuhe zweier benachbarter Schalenkerne voneinander abhängt. Die Ausgestaltung dieses Schrittmotors ist allgemein bekannt.

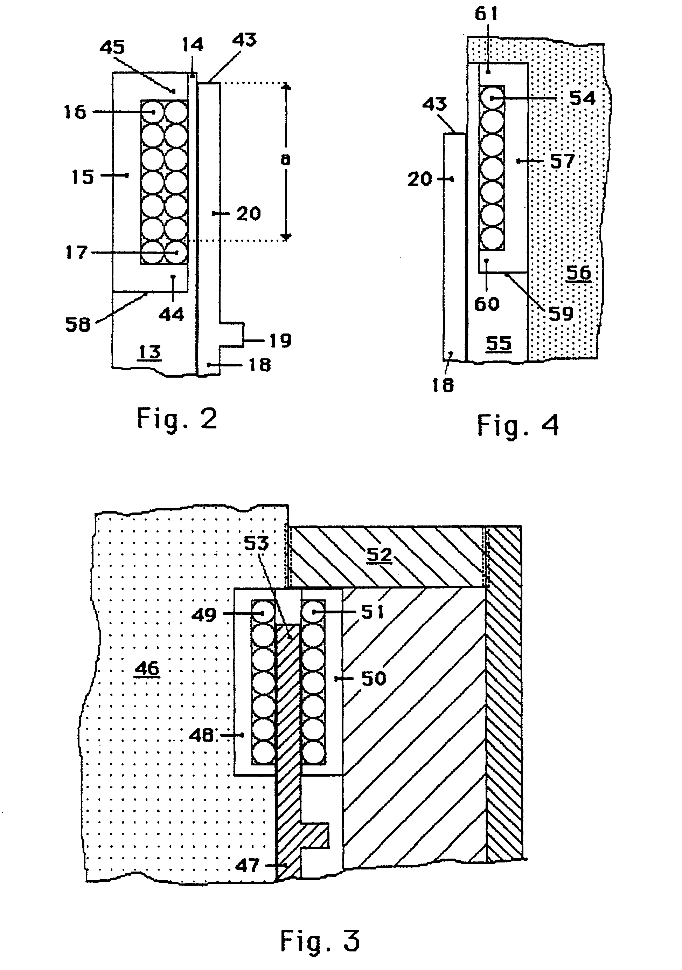

Gemäß den Figuren 1 und 2 besitzt die Hülse 13 an ihrem oberen Ende eine innen umlaufende Schulter 58 (Fig. 2), die peripher einen dünnwandigen, geschlossenen Randbereich 14 die Hülse beläßt. Innerhalb dieser umlaufenden Aussparung, gebildet durch die Schulter 58 und den Randbereich 14 der Hülse 13, ist ein Schalenkern 15 angeordnet, der ähnlich den Schalenkernen 21–23 ausgebildet ist. Der Schalenkern besitzt zwei endseitig angeordnete, ringförmige Polschuhe 44, 45, die sich radial nach außen erstrecken und an der Innenseite des Randbereiches 14 anliegen. Der Schalenkern 15 umfaßt somit mit seinem zylindrischen Teil die Kolbenstange 5, wie aus Figur 1 zu entnehmen ist. Zwischen den Polschuhen 44, 45 ist ein ringförmiger Aufnahmeraum ausgebildet in welchem zwei Spulen 16, 17 bifilar übereinandergewickelt angeordnet sind. Die Zuleitungen 41, 42 der beiden Spulen 16, 17 sind mit dem Regel- bzw. Steuerschaltkreis 39 verbunden. Die Windungen der Spulen 16, 17 verlaufen um die Längsachse 3 der Kolbenstange 5 herum in einem gewissen Bereich längs derselben; somit erstrecken sich die Spulen 16, 17 windungsmäßig längs der Längsachse 3 der Kolbenstange 5.

Der Hubschieber 18 besitzt im Bereich dieser Spulen 16, 17 ein Endteil 20, das mindestens die Länge der Längenausdehnung der Spulen 16, 17 besitzt und das sich in der oberen Endstellung des Hubschiebers 18 bis über den oberen Polschuh 45 des Schalenkerns 15 erstrecken kann. Die Länge der Spulen 16, 17 in Längsrichtung der Kolbenstange 5 ist dabei gleich oder etwas kleiner als der Gesamthub 8 des Hubschiebers 18. Vorzugsweise ist die Länge der Spulen 16, 17 etwa gleich dem Hub 8 des Hubschiebers 18, wobei in der oberen, in Figur 2 gezeigten Endstellung des Hubschiebers 18 dessen Endteil 20 dem oberen Polschuh 45 unmittelbar benachbart ist oder die Stirnfläche 43 des Endteils 20 diesen Polschuh 45 gerade überfahren hat und zwischen beiden als Restluftspalt praktisch nur die Dicke des Randbereichs 14 verbleibt. In der unteren Endstellung des Hubschiebers 18 deckt dessen Endteil 20 den unteren Polschuh 44 und einen Teil der Spulenwindungen ab, was aus der Angabe des Gesamthubes 8 in Figur 2 zu ersehen ist.

An die eine Spule 16 ist eine Wechselspannung gelegt, die aufgrund der Gegeninduktivität innerhalb der Spule 17 eine Gegenspannung induziert, die fortlaufend gemessen wird, so daß die beiden Spulen 16, 17 als Transformator geschaltet sind. Somit stellt die Meßschaltung einen Transformator mit veränderbarem Luftspalt dar.

Die Wirkungsweise dieser Vorrichtung ist folgende:

Wenn die Hubschieber 18 in seiner untersten Stellung sich befindet, stellt sich in der Sekundärspule 17 eine induzierte Gegenspannung ein, die unter anderem von der Länge des Luftspaltes zwischen den beiden Polschuhen 44, 45 des Schalenkerns 15 abhängt. Dieser Luftspalt hat somit in dieser Stellung die Länge der Spulen 16, 17. Gleitet nun der Hubschieber 18 aufgrund Ansteuerung einer der Erregerspulen 24–26 um einen Schritt auf der Kolbenstange 5 nach oben, so schiebt sich das Endteil 20 des Hubschiebers 18 um diese Schrittlänge weiter über den unteren Polschuh 44 und einen weiteren Teil der Windungen der Spulen 16, 17 hinweg, wodurch der Luftspalt für die magnetischen Feldlinien kürzer wird und die Gegeninduktivität der transformatorisch gekoppelten Spulen 16, 17 sich ändert, und zwar größer wird. Dadurch ändert sich die induzierte Gegenspannung, weshalb am Ausgang der Sekundärspule 17 ein geändertes Signal erhalten wird. Verschiebt sich nunmehr das Endteil 20 des Hubschiebers 18 schrittweise in Richtung des oberen Polschuhs 45, so wird bei jedem Schritt ein verändertes Ausgangssignal an der Sekundärspule 17 erhalten. Die Anordnung wirkt somit als Regeltransformator, in dem das Endteil 20 des Hubschiebers 18 aufgrund Veränderung der Luftspaltlänge die Gegeninduktivität der Anordnung verändert.

Figur 3 zeigt ein weiteres Beispiel einer transformatorisch gekoppelten Anordnung zur Gewinnung eines Stellungssignals bezüglich der Stellung des Hubschiebers.

Innerhalb einer Kolbenstange 46 ist in einer nutenförmigen Aussparung ein Schalenkern 48 angeordnet, der entsprechend dem Schalenkern der Figuren 1 und 2 gestaltet sein kann. In diesen Schalenkern 48 ist jedoch nur eine Spule 49 gewickelt. Ein zweiter Schalenkern 50 ist geeignet an einer Ringscheibe 52 befestigt, die zur Halterung des nicht gezeigten Stators des Schrittmotors dient. Auch dieser Schalenkern 50 ist ähnlich dem Schalenkern 15 gestaltet. Der Schalenkern 50 hat einen größeren Durchmesser als der Schalenkern 48 und umfaßt diesen konzentrisch dergestalt, daß zwischen beiden Schalenkernen ein torusförmiger Ringspalt verbleibt, in welchem. das Endteil 53 des Hubschiebers 47 bei Bewegung desselben mehr oder weniger einfährt. An die Spule 49 ist eine Wechselspannung gelegt, die innerhalb der Spule 51 des Schalenkerns 50 eine Gegenspannung induziert, die entsprechend der Stellung des Endteils 53 des Hubschiebers 47 sich ändert und in dieser Eigenschaft das Stellungssignal für die Verschließstellung des Hubschiebers 47 darstellt.

Figur 4 zeigt ein weiteres Ausführungsbeispiel, wobei hier innerhalb einer Aussparung 59 einer Messinghülse 55, die auf eine Kolbenstange 56 fest aufgezogen ist, ein Schalenkern 57 angeordnet ist, der nur eine einzige Spule 54 trägt. Die Ausgestaltung dieses Schalenkerns 57 zusammen mit der Spule 54 ist ähnlich derjenigen der Figuren 2 oder 3, auf die verwiesen wird. Der Hubschieber 18 mit seinem Endteil 20, der hier eine Zwischenstellung einnimmt, entspricht ebenfalls dem Hubschieber der Figur 2.

Bei Gleiten des Hubschiebers 18 auf der Kolbenstange 56 ändert sich der Luftspalt zwischen den beiden Polschuhen 60, 61 des Schalenkerns 57, wodurch sich bei Anlegen einer Wechselspannung an die Enden der Spule 54 die Eigeninduktivität derselben verändert und das veränderliche Ausgangssignal als Stellungssignal für die Verschließstellung des Hubschiebers 18 gemessen wird.

Zur Linearisierung des Stellungssignals können die Spule oder die Spulen mit nichtlinearer Wicklungsdichte gewickelt sein.

Vorzugsweise sind die Spulen oder die Spule windungsmäßig um die Kolbenstange herumgewickelt und erstrecken sich dabei windungsmäßig praktisch in Querschnittsebenen der Kolbenstange; die Spule oder die Spulen können aber auch in einer Aussparung der Kolbenstange angeordnet sein, ohne daß sich die Windungen um die Kolbenstange herumwinden.

**Patentansprüche**

1. Regelbares Ventil für die Kolbenstange (5, 46, 56) eines Schwingungsdämpfers (1), der mindestens einen mit einem Dämpfungsmedium gefüllten Zylinder (2) und die Kolbenstange (5, 46, 56) mit Kolben (6) umfaßt, der das Volumen des Zylinders (25) in zwei Kammern (9, 10) aufteilt, wobei die Kolbenstange (5, 46, 56) im Bereich des Kolbens (6) eine Längsbohrung (11) und oberhalb desselben die Längsbohrung (11) durchsetzende Querdurchbrüche, insbesondere Radialkanäle (12), aufweist, die gemeinsam zur Verbindung der beiden Kammern (9, 10) eine Passage bilden, welche durch einen in axialer Richtung der Kolbenstange (5, 46, 56) beweglichen, hülsenförmigen Hubschieber (18, 47) aus ferromagnetischem Material schrittweise verschließbar ist, der den beweglichen Teil eines Schrittmotors bildet und der an der Mantelwandung in Querschnittsebenen liegende, übereinander angeordnete Erhebungen (19) aufweist, wobei an der Kolbenstange (5, 46, 56) selektiv ansteuerbare Erregerspulen (24, 25, 26) mit Schalenkernen (21, 22, 23) angeordnet sind, die den Stator des Schrittmotors bilden und die den Hubschieber (18, 47) unter Belassung eines Luftspaltes zu den Erhebungen (19) umgeben und in Längsrichtung der Kolbenstange (5, 46, 56) angeordnet sind, dadurch gekennzeichnet, daß die Kolbenstange (5, 46, 56) im Bereich eines Endteils (20, 53) des Hubschiebers (18, 47) mindestens eine Spule (16, 17; 49, 51, 54) trägt, deren in Richtung des Spulenfeldes verlaufenden Achse parallel der Achse der Kolbenstange (5, 46, 56) verläuft und die sich in einem Bereich derselben erstreckt, wobei die Länge der Spule (16, 17; 49, 51; 54) ungefähr gleich dem Hub des Hubschiebers (18, 47) ist und dieselbe durch das Endteil (20, 53) desselben mehr oder weniger abgedeckt ist in Abhängigkeit der Stellung des Hubschiebers (18, 47) auf der Kolbenstange (5, 46, 56) und an die Spule (16, 49, 54) eine Wechselspannung gelegt ist und die jeweilige magnetische Induktivität der Spule (16, 17; 49, 51, 54) in Abhängigkeit von der wirksamen Lage ihres Luftspaltes als Stellungssignal für die jeweilige Verschließstellung des Hubschiebers (18, 47) bezüglich der Passage (11, 12, 31, 32, 34, 35, 36) gemessen wird.

2. Regelbares Ventil nach Anspruch 1, dadurch gekennzeichnet, daß die Kolbenstange (5, 46) zwei Spulen (16, 17; 49, 51) aufweist, wobei die eine Spule (16, 49) als die Primärwicklung, die andere Spule (17, 51) als die Sekundärwicklung eines Transformators geschaltet sind und an die Primärwicklung die Wechselspannung gelegt ist und als Signal für die jeweilige Verschließstellung des Hubschiebers (18, 47) bezüglich der Passage (11, 12, 31, 32, 33, 34, 35, 36) die in der Sekundärwicklung induzierte Spannung gemessen wird.

3. Regelbares Ventil nach Anspruch 2, dadurch gekennzeichnet, daß die beiden Spulen (16, 17) übereinandergewickelt in einem gemeinsamen Schalenkern (15) angeordnet sind und die Länge des Endteils (20) des Hubschiebers (18) mindestens die Länge der Spulen (16, 17) in axialer Richtung der Kolbenstange (5) besitzt.

4. Regelbares Ventil nach Anspruch 2, dadurch gekennzeichnet, daß die beiden Spulen (49, 51) in Abstand voneinander sich gegenüberstehend getrennt angeordnet sind, wobei das Endteil (53) des Hubschiebers (47) in den Raum zwischen die Spulen (49, 51) einfährt.

5. Regelbares Ventil nach Anspruch 1, 2, 3 oder 4, dadurch gekennzeichnet, daß die Spulen (16, 17, 49, 51, 54) innerhalb von ringförmigen Schalenkernen (15, 48, 50, 57) mit peripher vorstehenden, umlaufenden Polschuhen angeordnet sind, die in nutenförmigen Aussparungen (58, 59) angeordnet die Kolbenstange (5, 46, 56) umgeben und die vom Endteil (20, 53) des Hubschiebers (18, 47) überfahrbar sind.

6. Regelbares Ventil nach einem der vorherigen Ansprüche, dadurch gekennzeichnet, daß die Spulen (16, 17, 49, 51, 54) mit nicht konstanter Wirkungsdichte gewickelt sind.

7. Regelbares Ventil nach Anspruch 1 oder 2, dadurch gekennzeichnet, daß die Windungen der Spule (16, 17, 49, 51, 54) um die Kolbenstange (5, 46, 56) herum verlaufend praktisch in Querschnittsebenen derselben sich erstrecken.

8. Regelbares Ventil nach Anspruch 1 oder 2, dadurch gekennzeichnet, daß die Spule in einer Aussparung der Kolbenstange angeordnet ist, ohne daß die Windungen um dieselbe herumlaufen.

## Claims

1. A regulable value for the piston rod (5, 46, 56) of a vibration damper (1) comprising at least one cylinder (2) filled with a vibration absorbing medium and the piston rod (5, 46, 56) with piston (6), which divides the volume of the cylinder (25) into two chambers (9, 10), whereby the piston rod (5, 46, 56) has a longitudinal borehole (11) in the area of the piston (6) and, above said piston, lateral openings, especially radial channels (12) penetrate the longitudinal borehole (11) and these openings collectively serve to connect the two chambers (9, 10), thus forming a passage which can be closed step-by-step by means of a sleeve-shaped lifting slide (18, 47) made of ferromagnetic material, which is movable in the axial direction of the piston rod (5, 46, 56), and which forms the movable part of a stepping motor and which has elevations (19) arranged one above the other on the jacket wall in cross-sectional planes, whereby selectively controllable exciting coils (24, 25, 26) with shell-type cores (21, 22, 23) are located on the piston rod (5, 46, 56) forming the stator of the stepping motor and surrounding the lifting slide (18, 47), while leaving an air gap between them and the elevations (19), and being positioned longitudinally in relation to the piston rod (5, 46, 56), wherein near one end section (20, 53) of the lifting slide (18, 47), the piston rod (5, 46, 56) has at least one coil (16, 17; 49, 51; 54), whose axis extending in the direction of the loading section runs parallel to the axis of the piston rod (5, 46, 56) and which extends into a part thereof, whereby the length of the coil (16, 17; 49, 51, 54) is approximately equal to the stroke of the lifting slide (18, 47) and the coil is more or less covered by the end section (20, 53) of said lifting slide, depending on the position of the lifting slide (18, 47) on the piston rod (5, 46, 56), and an alternating voltage is applied to the coil (16, 17; 49, 51, 54) and the corresponding magnetic inductivity of the coil (16, 17; 49, 51, 54), depending on the effective position of its air gap, is measured as the positioning signal for the particular closing position of the lifting slide (18, 47) with respect to the passage (11, 12, 31, 32, 34, 35, 36).

2. A regulable valve according to claim 1, wherein the piston rod (5, 46) has two coils (16, 17; 49, 51), whereby the one coil (16, 49) is connected as the primary winding and the other coil (17, 51) is connected as the secondary winding of a transformer, alternating voltage is applied to the primary winding, and the voltage induced in the secondary winding is measured as the signal for the particular closing position of the lifting slide (18, 47) with respect to the passage (11, 12, 31, 32, 34, 35, 36).

3. A regulable valve according to claim 2, wherein both coils (16, 17) are wound over each other in a joint shell-type core (15) and the length of the end section (20) of the lifting slide (18) is at least as long as the length of the coils (16, 17) in the axial direction of the piston rod (5).

4. A regulable valve according to claim 2, wherein both coils (49, 51) are positioned separately, at a distance from and across from each other, whereby the end section (53) of the lifting slide (47) moves into the space between the coils (49, 51).

5. A regulable valve according to claim 1, 2, 3 or 4, wherein the coils (16, 17, 49, 51, 54) are positioned inside ring-shaped shell-type cores (15, 48, 50, 57) with peripherally protruding, encircling pole shoes, which surround the piston rod (5, 46, 56) in groove-shaped recesses (58, 59) and which can be overtraveled by the end section (20, 53) of the lifting slide (18, 47).

6. A regulable valve according to any one of the preceding claims, wherein the coils (16, 17; 49, 51, 54) are wound with a non constant efficiency density.

7. A regulable valve according to claim 1 or 2, wherein the windings of the coil (16, 17; 49, 51, 54) wrap around the piston rod (5, 46, 56) practically extending in cross-sectional planes.

8. A regulable valve according to claim 1 or 2, wherein the coil is located in a recess of the piston rod without the windings being wrapped around the piston rod.

## Revendications

1. Soupape réglable pour la tige de piston (5, 46, 56) d'un amortisseur de vibrations (1) comprenant au moins un cylindre (2) rempli d'un fluide amortisseur et la tige de piston (5, 46, 56) avec le piston (6) lequel divise le volume du cylindre (25) en deux chambres (9, 10), la tige de piston (5, 46, 56) présentant une forure longitudinale (11) au niveau du piston (6) et des passages transversaux, en particulier des canaux radiaux (12) au-dessus de ce dernier perçant la forure longitudinale (11) du piston (6) et formant en commun un passage qui met en communication les deux chambres (9, 10) et qui peut être fermé graduellement par une coulisse de levée (18, 47) sous forme de douille en matériau ferromagnétique, mobile en direction axiale par rapport à la tige de piston (5, 46, 56) et qui forme la partie mobile d'un moteur pas-à-pas et présente des saillies (19) disposées l'une au-dessus de l'autre dans un plan transversal sur la paroi de ladite coulisse de levée, la tige de piston (5, 46, 56) étant dotée de bobines excitatrices (24, 25, 26) pouvant être commandées de façon sélective et présentant des noyaux sous forme de coquille (21, 22, 23) constituant le stator du moteur pas-à-pas et qui entourent la coulisse de levée (18, 47) en laissant un entrefer par rapport aux saillies (19) et sont disposées longitudinalement à la tige de piston (5, 46, 56) caractérisée par le fait que la tige de piston (5, 46, 56) porte, dans la zone d'une extrémité (20, 53) de la coulisse de levée (18, 47), au moins une bobine (16, 17, 49, 51, 54) dont l'axe allant en direction du champ magnétique de la bobine s'étend parallèlement à l'axe de la tige de piston (5, 46, 56), ladite bobine (16, 17, 49, 51, 54) s'étendant dans une zone de cette dernière et présentant une longueur approximativement égale à la course de la coulisse de levée (18, 47), et étant plus ou moins recouverte par l'extrémité de cette dernière, en fonction de la position de la coulisse de levée (18, 47) sur la tige de piston (5, 46, 56), et qu'une tension alternative est appliquée à la bobine (16, 49, 54) et que l'inductivité magnétique de la bobine (16, 17; 49, 51, 54) est mesurée en fonction de la position efficace de son entrefer en tant que signal de position pour la position de fermeture respective de la coulisse de levée (18, 47) par rapport au passage (11, 12, 31, 32, 34, 35, 36).

2. Soupape réglable selon la revendication 1, caractérisée par le fait que la tige de piston (5, 46) présente deux bobines (16, 17; 49, 51), l'une de ces bobines (16, 49) étant montée comme enroulement primaire et l'autre (17, 51) comme enroulement secondaire d'un transformateur, qu'une tension alternative est appliquée à l'enroulement primaire et que la tension induite dans l'enroulement secondaire est mesurée comme signal pour la position de fermeture respective de la coulisse de levée (18, 47) par rapport au passage (11, 12, 31, 32, 33, 34, 35, 36).

3. Soupape réglable selon la revendication 2, caractérisée par le fait que les deux bobines (16, 17) sont disposées de façon superposée dans un noyau sous forme de coquille (15) commun et que la longueur de l'extrémité (20) de la coulisse de levée (18) correspond au moins à la longueur des bobines (16, 17) en direction axiale de la tige de piston (5).

4. Soupape réglable selon la revendication 2, caractérisée par le fait que les deux bobines (49, 51) sont disposées face-à-face de façon séparée et distante, la partie d'extrémité (53) de la coulisse de levée (47) s'insérant dans l'espace entre les bobines (49, 51).

5. Soupape réglable selon la revendication 1, 2, 3 ou 4 caractérisée par le fait que les bobines (16, 17, 49, 51, 54) sont disposées dans des noyaux sous forme de coquille (15, 48, 50, 57) annulaires avec des cornes polaires périphériques saillantes et faisant le pourtour qui, disposées dans des évidements sous forme de rainures (58, 59), entourent la tige de piston (5, 46, 56) et sur lesquelles peut passer la partie d'extrémité (20, 53) de la coulisse de levée (18, 47).

6. Soupape réglable selon l'une quelconque des revendications précédentes, caractérisée par le fait que les bobines (16, 17, 49, 51, 54) sont enroulées suivant une densité d'efficacité non constante.

7. Soupape réglable selon l'une quelconque des revendications 1 et 2, caractérisée par le fait que les spires de la bobine (16, 17, 49, 51, 54) faisant le pourtour de la tige de piston (5, 46, 56) s'étendent partiquement dans des plans transversaux par rapport à cette dernière.

8. Soupape réglable selon l'une quelconque des revendications 1 et 2, caractérisée par le fait que la bobine est disposée dans un évidement de la tige de piston, sans que ses spires fassent le pourtour de cette dernière.

EP 0 211 442 B1

Fig. 1

Fig. 2

Fig. 4

Fig. 3